# EUROPEAN PATENT APPLICATION

(11) **EP 4 803 768 A1**
(43) Date of publication of application: **09.09.2026**
(21) Application number: 24883899.7
(22) Date of filing: 29.05.2024
(51) Int. Cl.: F16D 27/01, F16D 27/118, F16D 27/14, B60K 6/387

(54) **POWER COUPLING DEVICE, TRANSMISSION, POWERTRAIN AND VEHICLE**

(30) Priority: 31.10.2023 CN 202311438715
(71) Applicant: BYD Company Limited, Shenzhen, Guangdong 518118 (CN)
(72) Inventor: ZHANG, Yisheng, Shenzhen, Guangdong 518118 (CN); GU, Ye, Shenzhen, Guangdong 518118 (CN); CUI, Xianjue, Shenzhen, Guangdong 518118 (CN); ZHANG, Jiahao, Shenzhen, Guangdong 518118 (CN); XU, Shilin, Shenzhen, Guangdong 518118 (CN)
(74) Representative: Mathys & Squire
(86) International application number: PCT/CN2024/096084
(87) International publication number: WO 2025/091887

(57) **Abstract**

A power coupling apparatus, a transmission, a powertrain, and a vehicle are provided. The power coupling apparatus includes: a first shaft, a first engagement mechanism connected to the first shaft, a second engagement mechanism, a second shaft connected to the second engagement mechanism, and an electromagnetic drive mechanism. The electromagnetic drive mechanism is configured to control coupling or decoupling between the first engagement mechanism and the second engagement mechanism.

## Description

This application claims priority to Chinese Patent Application No. 202311438715.0, filed with the China National Intellectual Property Administration on October 31, 2023 and entitled "POWER COUPLING APPARATUS, TRANSMISSION, POWERTRAIN, AND VEHICLE", which is incorporated herein by reference in its entirety.

### TECHNICAL FIELD

The present disclosure relates to the field of vehicles, and in particular, to a power coupling apparatus, a transmission including the power coupling apparatus, a powertrain including the transmission, and a vehicle including the powertrain.

### BACKGROUND

In conventional technologies, to improve user experience, a vehicle is usually equipped with an engine in addition to a motor, and power coupling and decoupling between the motor and the engine are implemented through a power coupling apparatus.

However, in the conventional technologies, the power coupling apparatus usually implements power coupling between the motor and the engine through a hydraulic system, resulting in a slow response speed.

### SUMMARY

In view of the shortcoming of the conventional technologies, an object of the present disclosure is to provide a power coupling apparatus that improves response speed, a transmission including the power coupling apparatus, a powertrain including the transmission, and a vehicle including the powertrain. Specifically, the following technical solutions are included.

According to a first aspect, the present disclosure provides a power coupling apparatus. The apparatus includes: a first shaft, a first engagement mechanism connected to the first shaft, a second shaft, a second engagement mechanism connected to the second shaft, and an electromagnetic drive mechanism. The electromagnetic drive mechanism is configured to control coupling or decoupling between the first engagement mechanism and the second engagement mechanism.

The electromagnetic drive mechanism, the first engagement mechanism connected to the first shaft, and the second engagement mechanism connected to the second shaft are disposed in the power coupling apparatus in the present disclosure, so that the power coupling apparatus in the present disclosure controls coupling or decoupling between the first engagement mechanism and the second engagement mechanism through the electromagnetic drive mechanism, to implement power coupling or decoupling between the first shaft and the second shaft, thereby improving response speed of the power coupling apparatus in the present disclosure.

In an embodiment, the first engagement mechanism includes at least one first connection portion; the second engagement mechanism includes a second connection portion matching the first connection portion, the second connection portion is disposed above the first connection portion in a first direction; and the electromagnetic drive mechanism includes a movable portion corresponding to the second connection portion, and the movable portion is configured to control the second connection portion to be coupled to the first connection portion.

In an embodiment, the second engagement mechanism further includes an elastic member connected to the second connection portion; and the elastic member is configured to control the second connection portion to be decoupled from the first connection portion.

In an embodiment, the second connection portion includes a guide portion, the guide portion matches the movable portion, and the guide portion and the movable portion are configured to control the second connection portion to be coupled to the first connection portion.

In an embodiment, the guide portion includes a first surface and a second surface that are connected, and an included angle between the second surface and the first surface is an obtuse angle.

In an embodiment, the movable portion includes a guide surface, the guide surface being disposed at an end portion of the movable portion, and the guide surface being an inclined surface.

In an embodiment, the first connection portion includes a groove facing the second connection portion; the second connection portion includes a protruding block facing the first connection portion; and the movable portion controls the protruding block to extend into the groove, to implement coupling between the first connection portion and the second connection portion.

In an embodiment, a side surface of the groove is provided with a limiting protrusion; a side surface of the protruding block that is close to the limiting protrusion is provided with a limiting groove; and when the movable portion controls the protruding block to extend into the groove, the limiting protrusion is embedded in the limiting groove, to improve coupling stability of the first connection portion and the second connection portion.

In an embodiment, the electromagnetic drive mechanism further includes: an electromagnetic drive element; a magnetic element; and a mounting board, wherein the magnetic element is connected to the mounting board, and the mounting board is provided with the movable portion; and when the electromagnetic drive element is powered on, the magnetic element is attracted by the electromagnetic drive element, to drive the movable portion of the mounting board to decouple the first connection portion from the second connection portion.

In an embodiment, the electromagnetic drive element is annular and is sleeved around an outer edge of the first shaft.

In an embodiment, the electromagnetic drive mechanism further includes: a push plate assembly, wherein the push plate assembly is connected between the mounting board and the magnetic element; a second elastic member, connected between the electromagnetic drive element and the push plate assembly; when the electromagnetic drive element is powered on, the magnetic element is attracted by the electromagnetic drive element to drive the movable portion of the mounting board to decouple the first connection portion from the second connection portion, and the second elastic member is compressed; and when the electromagnetic drive element is powered off, the second elastic member expands to drive the movable portion of the mounting board through the push plate assembly, to couple the first connection portion and the second connection portion.

In an embodiment, the push plate assembly includes: a first push plate, connected to the mounting board; a second push plate, connected to the magnetic element; a bearing, connected between the first push plate and the second push plate; and the bearing is configured to transmit axial force exerted by the electromagnetic drive element or the second elastic member when the electromagnetic drive element is powered on or off.

In an embodiment, the power coupling apparatus further includes a support bearing that is sleeved around the outer edge of the first shaft and is at least partially accommodated in the electromagnetic drive element to support the electromagnetic drive element.

In an embodiment, the power coupling apparatus further includes a thrust bearing that is connected between the first engagement mechanism and the second engagement mechanism to transmit an axial load between the first engagement mechanism and the second engagement mechanism.

According to a second aspect, the present disclosure provides a transmission including the power coupling apparatus.

In an embodiment, the transmission includes a housing, and the power coupling apparatus is accommodated in the housing.

According to a third aspect, the present disclosure provides a powertrain, including a first power apparatus, a second power apparatus, and the transmission, wherein the first power apparatus is connected to a second end of the transmission, and the second power apparatus is connected to a first end of the transmission.

In an embodiment, the powertrain further includes a third power apparatus connected to the first end of the transmission.

According to a fourth aspect, the present disclosure provides a vehicle, including the powertrain.

It will be understood that the transmission, the powertrain, and the vehicle provided in the second aspect to the fourth aspect of the present disclosure all use the power coupling apparatus provided in the first aspect of the present disclosure, thereby implementing effect of improving the response speed.

### BRIEF DESCRIPTION OF DRAWINGS

FIG. 1 is a diagram of a structure of a powertrain according to an embodiment according to the present disclosure;
FIG. 2 is another diagram of a structure of a powertrain according to an embodiment according to the present disclosure;
FIG. 3 is a diagram of a structure of a power coupling apparatus according to an embodiment according to the present disclosure;
FIG. 4 is a cross-sectional view of a power coupling apparatus according to an embodiment according to the present disclosure;
FIG. 5 is an exploded view of a power coupling apparatus according to an embodiment according to the present disclosure;
FIG. 6 is a diagram of a partial structure of a power coupling apparatus according to an embodiment according to the present disclosure;
FIG. 7 is a diagram of a partial structure of a power coupling apparatus in a decoupled state according to an embodiment according to the present disclosure;
FIG. 8 is another diagram of a partial structure of a power coupling apparatus in a decoupled state according to an embodiment according to the present disclosure;
FIG. 9 is a diagram of a partial structure of a power coupling apparatus in a coupled state according to an embodiment according to the present disclosure;
FIG. 10 is another diagram of a partial structure of a power coupling apparatus in a coupled state according to an embodiment according to the present disclosure;
FIG. 11 is still another diagram of a partial structure of a power coupling apparatus in a decoupled state according to an embodiment according to the present disclosure;
FIG. 12 is still another diagram of a partial structure of a power coupling apparatus in a coupled state according to an embodiment according to the present disclosure; and
FIG. 13 is a diagram of a partial structure of a power coupling apparatus according to an embodiment according to the present disclosure.

### DESCRIPTION OF EMBODIMENTS

For ease of understanding of the present disclosure, the following describes the present disclosure more comprehensively with reference to the accompanying drawings. Preferred implementations according to the present disclosure are shown in the accompanying drawings. However, the present disclosure may be implemented in a plurality of different forms and is not limited to implementations described in this specification. On the contrary, these implementations are provided for a more thorough and comprehensive understanding of content disclosed in the present disclosure.

The descriptions of the following embodiments refer to the accompanying drawings which illustrate specific embodiments that may be implemented in the present disclosure. In this specification, the sequence numbers, such as "first" and "second", of components are merely intended to distinguish between the described objects, and do not have any sequential or technical meaning. However, "connection" and "linking" in the present disclosure include a direct connection and an indirect connection (linking), unless otherwise specified. The direction terms mentioned in the present disclosure, for example, "up", "down", "front", "back", "left", "right", "inside", "outside", and "side", are merely directions with reference to the accompanying drawings. Therefore, the orientation terms are used to better and more clearly describe and understand the present disclosure, instead of indicating or implying that an apparatus or element needs to have a specific orientation and be constructed and operated in a specific orientation, and will not be understood as limitations on the present disclosure.

In descriptions of the present disclosure, it will be noted that unless otherwise expressly specified and limited, the terms "mount", "interconnect", and "connect" will be understood in a broad sense. For example, such terms may indicate fastening, a detachable connection, or an integral connection; may indicate a mechanical connection; and may indicate direct interconnection, indirect interconnection through an intermediate medium, or internal communications between two elements. For a person of ordinary skill in the art, a specific meaning of the foregoing terms in the present disclosure will be understood based on a specific situation. It will be noted that, in the specification, claims, and accompanying drawings of the present disclosure, the terms "first", "second", and the like are intended to distinguish between different objects but do not indicate a particular order. In addition, the terms "include", "may include", "comprise", or "may comprise" as used in the present disclosure indicate presence of a disclosed corresponding function, operation, element, or the like, and do not limit one or more other further functions, operations, elements, or the like. In addition, the term "include" or "comprise" indicates presence of the disclosed corresponding features, quantities, steps, operations, elements, components, or a combination thereof in this specification, with presence or addition of one or more other features, quantities, steps, operations, elements, components, or the combination thereof not excluded.

Unless otherwise defined, all technical and scientific terms used in this specification have same meanings as those usually understood by a person skilled in the art of the present disclosure. The terms used in the specification of the present disclosure are merely for the purpose of describing specific implementations, and are not intended to limit the present disclosure.

The present disclosure provides a vehicle, including a wheel and a powertrain. The wheel is connected to a power output end of the powertrain, and power inside the powertrain is output externally to the wheel through the power output end, to control the wheel to rotate, thereby implementing running of the vehicle disclosed in the present disclosure.

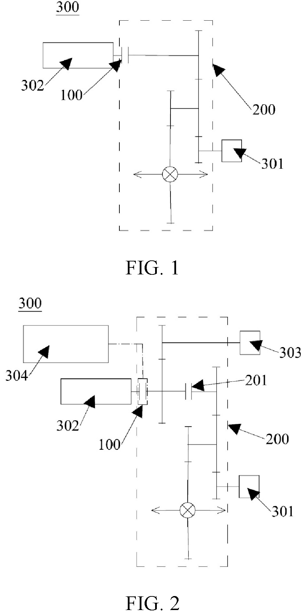

FIG. 1 is a diagram of a structure of a powertrain 300 according to an embodiment according to the present disclosure.

As shown in FIG. 1, the powertrain 300 in the present disclosure includes a first power apparatus 301, a second power apparatus 302, and a transmission 200. The first power apparatus 301 is connected to a second end of the transmission 200. It will be understood that power output from the first power apparatus 301 can be directly transmitted to the transmission 200, and after being processed by the transmission 200, power is output externally. This implements a power output function of the powertrain 300 in the present disclosure.

As shown in FIG. 1, the transmission 200 includes a power coupling apparatus 100 accommodated in a housing (not shown in the figure). A first shaft (not shown in the figure) of the power coupling apparatus 100 serves as a first end of the transmission 200, and a second shaft (not shown in the figure) of the power coupling apparatus 100 is connected to another structure of the transmission 200.

The second power apparatus 302 is connected to the first shaft (not shown in the figure) of the power coupling apparatus 100 of the transmission 200. The power coupling apparatus 100 can implement coupling and decoupling between the second power apparatus 302 and another structure of the transmission 200, thereby switching the working status of the powertrain 300 in the present disclosure.

When the power coupling apparatus 100 is decoupled, power input to the transmission 200 is provided by only the first power apparatus 301. When the power coupling apparatus 100 is coupled, power of the second power apparatus 302 can be output to the first end of the transmission 200, and cooperate with power of the first power apparatus 301 to increase power input into the transmission 200, thereby increasing power output from the transmission 200. Further, the use scenario of the powertrain 300 in the present disclosure is expanded.

It will be understood that, in this embodiment, the first power apparatus 301 may be configured as a motor, and the second power apparatus 302 may be configured as an engine. In another embodiment, the first power apparatus 301 may alternatively be configured as an engine, and the second power apparatus 302 may be configured as a motor. In some other embodiments, the first power apparatus 301 and the second power apparatus 302 may alternatively be configured as other power mechanisms. This is not particularly limited in the present disclosure.

For ease of description, in subsequent embodiments, the first power apparatus 301 is configured as a motor, and the second power apparatus 302 is configured as an engine.

FIG. 2 is another diagram of a structure of a powertrain 300 according to an embodiment according to the present disclosure.

As shown in FIG. 2, the powertrain 300 in the present disclosure further includes a third power apparatus 303. The third power apparatus 303 is connected between the second shaft (not shown in the figure) of the power coupling apparatus 100 and another structure of the transmission 200.

When the power coupling apparatus 100 is decoupled, power of the third power apparatus 303 can be output to the transmission 200, and cooperate with power of the first power apparatus 301 to jointly drive the transmission 200 to rotate. When the power coupling apparatus 100 is coupled, the third power apparatus 303 stops power output, and the second power apparatus 302 cooperates with the first power apparatus 301 to jointly drive the transmission 200 to rotate.

It will be understood that, in this embodiment, the third power apparatus 303 may be configured as a generator. When the power coupling apparatus 100 is coupled, power output from the second power apparatus 302 may be further transmitted to the third power apparatus 303, converted into electric energy through the third power apparatus 303, and stored in a battery (not shown in the figure).

In an embodiment, as shown in FIG. 2, the transmission 200 in the present disclosure further includes a clutch 201. The clutch 201 is connected between the second shaft (not shown in the figure) of the power coupling apparatus 100 and another structure of the transmission 200. When the clutch 201 is decoupled, neither power of the second power apparatus 302 nor power of the third power apparatus 303 can be output to an output end of the transmission 200 through the transmission 200. In this case, power of the powertrain 300 in the present disclosure is provided by only the first power apparatus 301. In this case, a vehicle using the powertrain 300 in the present disclosure uses electric drive.

The powertrain 300 further includes a vehicle control system 304. In a running process of the vehicle, the vehicle control system 304 controls coupling or decoupling between the power coupling apparatus 100 of the transmission 200 and the clutch 201 based on a state of charge of a battery, a degree of accelerator pedal depression, and a vehicle speed. This implements power drive of the powertrain 300 in the present disclosure under different conditions.

Specifically, when the power coupling apparatus 100 is coupled and the clutch 201 is decoupled, power of the first power apparatus 301 is released externally through the transmission 200. Power of the second power apparatus 302 is transmitted to the third power apparatus 303 through the power coupling apparatus 100, to enable the third power apparatus 303 to generate power. Electric energy generated by the third power apparatus 303 can be transmitted to the battery to charge the battery, increasing electric energy of the battery. In this case, a vehicle using the powertrain 300 in the present disclosure uses electric drive.

When the power coupling apparatus 100 is decoupled and the clutch 201 is coupled, power of the third power apparatus 303 is transmitted to the second end of the transmission 200 through the clutch 201, and cooperate with power output from the first power apparatus 301 to jointly drive the transmission 200 to output power externally. In this case, the vehicle using the powertrain 300 in the present disclosure uses electric drive assisted by the generator.

When the power coupling apparatus 100 is coupled and the clutch 201 is also coupled, power output from the second power apparatus 302 is transmitted to the third power apparatus 303 while simultaneously being transmitted to the second end of the transmission 200 through the power coupling apparatus 100 and the clutch 201, and cooperate with the first power apparatus 301 to jointly drive the transmission 200 to output power externally. In this case, the vehicle using the powertrain 300 in the present disclosure uses other electric drive assisted by the engine.

It will be understood that, in another embodiment, the clutch 201 may alternatively be configured as the power coupling apparatus 100. In some other embodiments, the clutch 201 may alternatively be configured as another clutch. This is not particularly limited in the present disclosure.

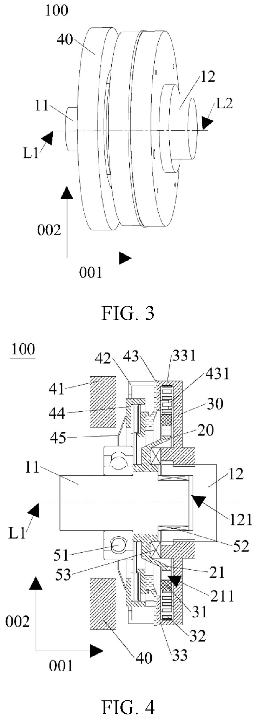

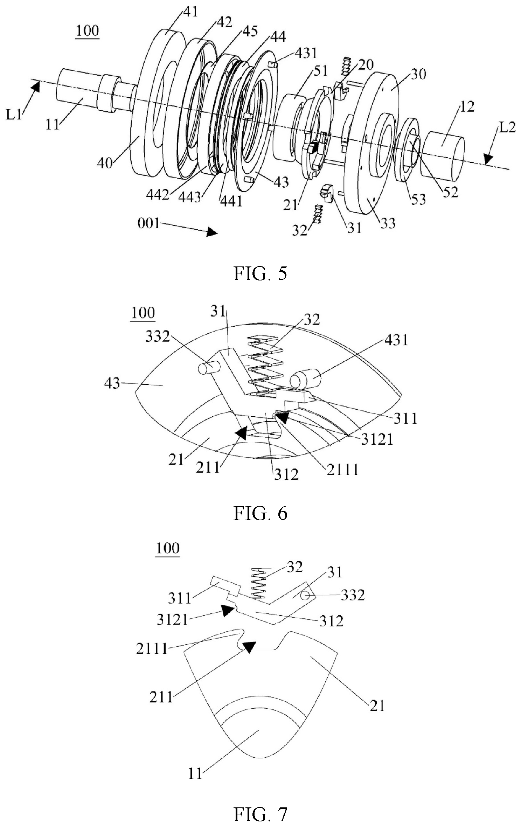

FIG. 3 is a diagram of a structure of a power coupling apparatus 100 provided in an embodiment of the present disclosure. FIG. 4 is a cross-sectional view of a power coupling apparatus according to an embodiment according to the present disclosure. FIG. 5 is an exploded view of a power coupling apparatus 100 according to an embodiment according to the present disclosure.

As shown in FIG. 3 to FIG. 5, the power coupling apparatus 100 in the present disclosure includes a first shaft 11, a second shaft 12, a first engagement mechanism 20, a second engagement mechanism 30, and an electromagnetic drive mechanism 40. A first axis L1 of the first shaft 11 coincides with a second axis L2 of the second shaft 12, and the first shaft 11 is rotatably connected to the second shaft 12.

For ease of understanding, in the power coupling apparatus 100 in the present disclosure, an axial direction of the first shaft 11 is set as a first direction 001 and a radial direction of the first shaft 11 is set as a second direction 002.

As shown in FIG. 3 to FIG. 5, the first engagement mechanism 20 includes a first connection portion 21. The first connection portion 21 is annular, and the first shaft 11 passes through the first connection portion 21 and is fastened to the first connection portion 21. A geometric axis of the first connection portion 21 coincides with the first axis L1. It will be understood that the first connection portion 21 rotates synchronously with the first shaft 11.

The second engagement mechanism 30 includes a second connection portion 31, an elastic member 32, and a mounting plate 33. The second shaft 12 extends into the mounting plate 33 and is fastened to the mounting plate 33. An outer edge of the mounting plate 33 is provided with a protruding portion 331. The protruding portion 331 extends toward the first connection portion 21 in the first direction 001 to form receiving space, so that the first connection portion 21 is at least partially accommodated in the receiving space.

In the second direction 002, one end of the second connection portion 31 is connected to the protruding portion 331 through the elastic member 32, and the other end extends toward the first connection portion 21. The elastic member 32 is a pre-tensioned elastic member. The first connection portion 21 and the second connection portion 31 match each other, so that the second connection portion 31 may be driven by external force to move toward the first connection portion 21 or away from the first connection portion 21, to implement coupling or decoupling between the second connection portion 31 and the first connection portion 21. This implements coupling or decoupling between the first engagement mechanism 20 and the second engagement mechanism 30.

It will be understood that, when the first connection portion 21 is coupled to the second connection portion 31, a torque driving rotation of the first shaft 11 can be transmitted to the second engagement mechanism 30 through the first engagement mechanism 20, and transmitted to the second shaft 12, so that the second shaft 12 rotates synchronously with the first shaft 11. This implements motion coupling between the first shaft 11 and the second shaft 12.

However, when the first connection portion 21 is decoupled from the second connection portion 31, the torque driving rotation of the first shaft 11 cannot be transmitted to the second engagement mechanism 30 after being transmitted to the first engagement mechanism 20. This implements motion decoupling between the first shaft 11 and the second shaft 12.

In the first direction 001, the electromagnetic drive mechanism 40 surrounds an outer edge of the first shaft 11 and is located on a side of the first engagement mechanism 20 that is away from the second engagement mechanism 30. The electromagnetic drive mechanism 40 includes a movable portion 431 matching the second connection portion 31. The movable portion 431 is disposed at one end of the electromagnetic drive mechanism 40 that faces the first engagement mechanism 20, and is in contact with the second connection portion 31.

When the electromagnetic drive mechanism 40 is powered on, electromagnetic forces inside the electromagnetic drive mechanism 40 can drive the movable portion 431 to extend in the first direction 001, and drive the second connection portion 31 to move toward the first connection portion 21 until the second connection portion 31 is coupled to the first connection portion 21. This implements a power coupling function of the power coupling apparatus 100 in the present disclosure.

When the electromagnetic drive mechanism 40 is powered off, electromagnetic forces inside the electromagnetic drive mechanism 40 disappear, and the movable portion 431 retracts in the first direction 001 under action of an internal structure of the electromagnetic drive mechanism 40. An elastic member 32 is provided between the second connection portion 31 and the protruding portion 331. It will be understood that, in a process in which the second connection portion 31 moves toward the first connection portion 21, the elastic member 32 is stretched and stores elastic force. When the movable portion 431 retracts, the second connection portion 31 moves away from the first connection portion 21 under action of elastic force of the elastic member 32, until the second connection portion 31 is decoupled from the first connection portion 21. This implements the power decoupling function of the power coupling apparatus 100 in the present disclosure.

Therefore, in comparison with the conventional technology in which coupling and decoupling of a power coupling apparatus are controlled through a hydraulic system, in the present disclosure, the power coupling apparatus 100 is provided with the electromagnetic drive mechanism 40, and the movable portion 431 of the electromagnetic drive mechanism 40 is used to drive to move the second connection portion 31, thereby shortening running time required for coupling the power coupling apparatus 100, and improving response speed of the power coupling apparatus 100 in the present disclosure.

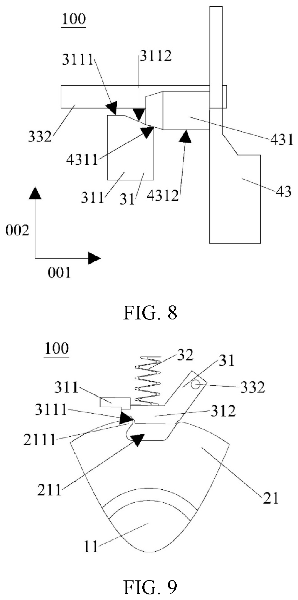

Specifically, FIG. 6 is a diagram of a partial structure of a power coupling apparatus 100 according to an embodiment according to the present disclosure; FIG. 7 is a diagram of a partial structure of a power coupling apparatus 100 in a decoupled state according to an embodiment according to the present disclosure; and FIG. 8 is a diagram of another partial structure of a power coupling apparatus 100 in a decoupled state according to an embodiment according to the present disclosure. Still refer to FIG. 4.

As shown in FIG. 4, FIG. 6, FIG. 7, and FIG. 8, the second connection portion 31 is provided with a guide portion 311, and the guide portion 311 and the movable portion 431 match each other. The guide portion 311 is located on a side of the second connection portion 31 that is away from the first connection portion 21. The guide portion 311 includes a first surface 3111 and a second surface 3112 that are connected. The first surface 3111 is an end surface of the second connection portion 31 that is away from the first connection portion 21. An included angle between the second surface 3112 and the first surface 3111 is an obtuse angle.

As shown in FIG. 4, FIG. 6, FIG. 7, and FIG. 8, the movable portion 431 includes a guide surface 4311, the guide surface 4311 is disposed at an end portion of the movable portion 431, and the guide surface 4311 is an inclined surface. An inclination angle of the inclined surface matches the included angle between the second surface 3112 and the first surface 3111.

As shown in FIG. 7 and FIG. 8, when the electromagnetic drive mechanism 40 is powered off, the guide surface 4311 of the movable portion 431 is in contact with the second surface 3112. After the electromagnetic drive mechanism 40 is powered on, the movable portion 431 extends in the first direction 001 and slides along the second surface 3112 toward the first surface 3111, so that the second connection portion 31 moves toward the first connection portion 21, to stretch the elastic member 32.

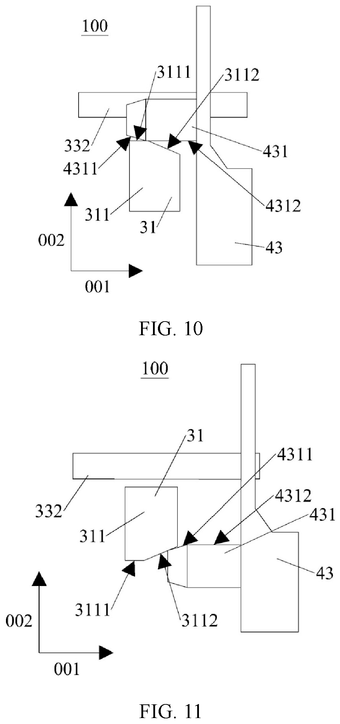

In addition, as shown in FIG. 9 and FIG. 10, when the guide surface 4311 of the movable portion 431 is separated from the second surface 3112 and a side surface 4312 of the movable portion 431 is in contact with the first surface 3111, extension of the movable portion 431 in the first direction 001 does not enable the second connection portion 31 to move. In this case, the second connection portion 31 is coupled to the first connection portion 21. This implements the power coupling function of the power coupling apparatus 100 in the present disclosure.

As shown in FIG. 9 and FIG. 10, when the electromagnetic drive mechanism 40 is switched from a powered-on state to a powered-off state, the movable portion 431 retracts in the first direction 001, and the side surface 4312 of the movable portion 431 is still in contact with the first surface 3111. In this case, due to abutment of the movable portion 431, the second connection portion 31 cannot move away from the first connection portion 21 under action of the elastic member 32. When the side surface 4312 of the movable portion 431 is separated from the first surface 3111, abutting effect of the movable portion 431 on the second connection portion 31 disappears, and the elastic member 32 drives the second connection portion 31 to move away from the first connection portion 21, until the guide surface 4311 abuts against the second surface 3112.

As shown in FIG. 7 and FIG. 8, when the movable portion 431 retracts to a preset position, the elastic member 32 drives the second connection portion 31 and causes the guide surface 4311 to abut against the second surface 3112. In this case, the second connection portion 31 is separated from the first connection portion 21. This implements the power decoupling function of the power coupling apparatus 100 in the present disclosure.

It will be understood that, when the movable portion 431 retracts to the preset position, the elastic member 32 still causes the guide surface 4311 to abut against the second surface 3112. In this case, when the electromagnetic drive mechanism 40 is powered on, impact of the movable portion 431 on the guide portion 311 can be reduced, preventing undesired alignment of the second connection portion 31 with the first connection portion 21 due to the impact. This ensures the power coupling function of the power coupling apparatus 100 in the present disclosure, and improves reliability of the power coupling apparatus 100 in the present disclosure.

In some other embodiments, in the power coupling apparatus 100 in the present disclosure, the guide portion 311 may alternatively be provided with only the first surface 3111 and the second surface 3112 whose included angle is an obtuse angle, or the movable portion 431 may be provided with only the inclined surface. This is not particularly limited in the present disclosure.

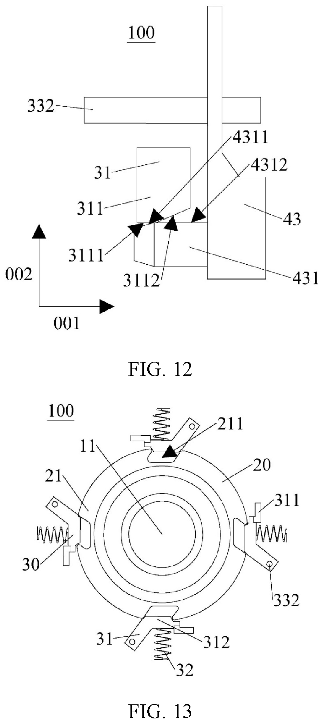

In another embodiment, as shown in FIG. 11 and FIG. 12, the guide portion 311 is located on a side of the second connection portion 31 that faces the first connection portion 21, and the first surface 3111 is an end surface of the second connection portion 31 that faces the first connection portion 21. The elastic member 32 is configured as a pre-loaded elastic member.

As shown in FIG. 11, when the movable portion 431 retracts in the first direction 001, elastic force of the elastic member 32 drives the second connection portion 31 to be coupled to the first connection portion 21 in the second direction 002. This implements coupling between the first shaft 11 and the second shaft 12.

As shown in FIG. 12, when the movable portion 431 extends in the first direction 001, the guide surface 4311 of the movable portion 431 slides along the second surface 3112, to drive the second connection portion 31 to move away from the first connection portion 21 and compress the elastic member 32, until the side surface 4312 of the movable portion 431 abuts against the first surface 3111. In this case, the first connection portion 21 is decoupled from the second connection portion 31. This implements decoupling between the first shaft 11 and the second shaft 12.

Therefore, the first surface 3111 and the second surface 3112 whose angle is an obtuse angle and the guide surface 4311 configured as an inclined surface match each other, ensuring that force driving the movable portion 431 to move in the first direction 001 drives the second connection portion 31 to move in the second direction 002. This implements the coupling function and the decoupling function of the power coupling apparatus 100 in the present disclosure.

In an embodiment, as shown in FIG. 4 to FIG. 6, in the second direction 002, the first connection portion 21 further includes a groove 211 facing the second connection portion 31, and the second connection portion 31 further includes a protruding block 312 facing the first connection portion 21. The groove 211 and the protruding block 312 match each other.

When the movable portion 431 extends in the first direction 001, the second connection portion 31 moves toward the first connection portion 21, to enable the protruding block 312 of the second connection portion 31 to extend into the groove 211 of the first connection portion 21. It will be understood that, when the protruding block 312 extends into the groove 211 and the first shaft 11 rotates, the first shaft 11 drives the first engagement mechanism 20 to rotate around the first axis L1, to drive the groove 211 to rotate around the first axis L1. Based on attachment of a side surface of the groove 211 to a side surface of the protruding block 312, forces driving the groove 211 to rotate are also transmitted to the protruding block 312, to drive the protruding block 312 to rotate around the first axis L1. This implements coupling between the first connection portion 21 and the second connection portion 31, and implements the power coupling function of the power coupling apparatus 100 in the present disclosure.

In another embodiment, in the second direction 002, a side of the first connection portion 21 that faces the second connection portion 31 may alternatively be provided with a protruding block, and a side of the second connection portion 31 that faces the first connection portion 21 may alternatively be provided with a groove. When the movable portion 431 extends, the groove in the second connection portion 31 extends into the corresponding protruding block, thereby implementing the power coupling function of the power coupling apparatus 100 in the present disclosure.

In an embodiment, still refer to FIG. 6 and FIG. 8. A side surface of the groove 211 is provided with a limiting protrusion 2111; and a side surface of the protruding block 312 that is close to the limiting protrusion 2111 is provided with a limiting groove 3121. As shown in FIG. 8, when the movable portion 431 drives the protruding block 312 to extend into the groove 211, the limiting protrusion 2111 may be embedded in the limiting groove 3121, to improve contact stability of the protruding block 312 and the groove 211. This improves coupling stability of the first connection portion 21 and the second connection portion 31.

In an embodiment, refer to FIG. 6 to FIG. 12. An adapter protrusion 332 protrudes from a surface of the mounting plate 33 that faces the second connection portion 31, and the second connection portion 31 is rotatably connected to the adapter protrusion 332, to rotate around a geometric axis of the adapter protrusion 332 under action of the movable portion 431 or the elastic member 32, and enables the protruding block 312 of the second connection portion 31 to extend or retract from the groove 211. It will be understood that, disposition of the adapter protrusion 332 can ensure relative movement of the second connection portion 31 and the first connection portion 21, and can further implement positioning of the second connection portion 31, thereby further improving coupling stability of the first connection portion 21 and the second connection portion 31.

It will be understood that, in some other embodiments, there may be another connection relationship between the second connection portion 31 and the mounting plate 33. This is not particularly limited in the present disclosure.

FIG. 13 is a diagram of a partial structure of a power coupling apparatus 100 according to an embodiment according to the present disclosure. To facilitate representation of a quantity relationship between the first connection portion 21 and the second connection portion 31, a part of structures of the second engagement mechanism 30 are omitted in FIG. 13.

As shown in FIG. 13, there are a plurality of second connection portions 31, and the second connection portions 31 are evenly distributed in a circumferential direction of the first shaft 11. Correspondingly, grooves 211 in the first connection portion 21, movable portions 431 on the electromagnetic drive mechanism 40, and second connection portions 31 are the same in quantity, and match each other in one-to-one correspondence.

It will be understood that a plurality of first connection portions 21 are evenly distributed in a circumferential direction, and the grooves 211 in the plurality of first connection portions 21 and the movable portions 431 on the electromagnetic drive mechanism 40 match each other, so that each second connection portion 31 matches a groove 211 in the first connection portion 21, improving coupling stability of the first connection portion 21 and the second connection portion 31. This further improves power coupling stability of the power coupling apparatus 100 in the present disclosure.

In an embodiment, as shown in FIG. 4 and FIG. 5, the electromagnetic drive mechanism 40 further includes an electromagnetic drive element 41, a magnetic element 42, and a mounting board 43. The electromagnetic drive element 41 is electrically connected to an external circuit. The magnetic element 42 has magnetic conductivity, and is located on a side of the electromagnetic drive element 41 that faces the first engagement mechanism 20. The mounting board 43 is connected to a side of the magnetic element 42 that faces the first engagement mechanism 20, and the movable portion 431 is disposed on the mounting board 43.

When the electromagnetic drive element 41 is powered on, the magnetic element 42 translates toward the electromagnetic drive element 41 under action of electromagnetic forces, and is attracted by the electromagnetic drive element 41. The mounting board 43 connected to the magnetic element 42 also moves synchronously with the magnetic element 42, to enable the movable portion 431 to retract in the first direction 001. This implements decoupling between the first connection portion 21 and the second connection portion 31, and further implements the power decoupling function of the power coupling apparatus 100 in the present disclosure.

In addition, the electromagnetic drive element 41 is annular and is sleeved around an outer edge of the first shaft 11. When there are a plurality of second connection portions 31, all movable portions 431 are distributed in a circumferential direction of the electromagnetic drive element 41. It will be understood that, the annular electromagnetic drive element 41 ensures a telescoping function of the movable portion 431 through the electromagnetic drive mechanism 40 in the present disclosure, and reduces a size of the power coupling apparatus 100 in the present disclosure in the first direction 001, thereby saving space for the power coupling apparatus 100 in the present disclosure.

In an embodiment, as shown in FIG. 4 and FIG. 5, the electromagnetic drive mechanism 40 further includes a push plate assembly 44 and a second elastic member 45. In the first direction 001, the push plate assembly 44 is connected between the mounting board 43 and the magnetic element 42, and the second elastic member 45 is connected between the electromagnetic drive element 41 and the push plate assembly 44.

When the electromagnetic drive element 41 is powered on, the magnetic element 42 is attracted by the electromagnetic drive element 41, compressing the second elastic member 45. After the electromagnetic drive mechanism 40 is powered off, elastic force stored in the second elastic member 45 is released, and elastic force in the second elastic member 45 sequentially acts on the mounting board 43 through the magnetic element 42 and the push plate assembly 44, to enable the movable portion 431 to extend in the first direction 001. This implements decoupling between the first connection portion 21 and the second connection portion 31, and further implements the power decoupling function of the power coupling apparatus 100 in the present disclosure.

In an embodiment, as shown in FIG. 4 and FIG. 5, the push plate assembly 44 includes a first push plate 441, a second push plate 442, and a bearing 443. The first push plate 441 is connected between an inner ring of the bearing 443 and the mounting board 43, and the second push plate 442 is connected between an outer ring of the bearing 443 and the magnetic element 42. The bearing 443 is configured to transmit axial force.

It will be understood that, disposition of the bearing 443 ensures that when the electromagnetic drive element 41 is powered on, electromagnetic forces generated by the electromagnetic drive element 41 can be transmitted to the movable portion 431 through the bearing 443. In addition, when the electromagnetic drive element 41 is powered off, elastic force in the second elastic member 45 can also be transmitted to the movable portion 431 through the bearing 443. This ensures the telescoping function of the movable portion 431 through the electromagnetic drive mechanism 40. This ensures the power coupling function and the power decoupling function of the power coupling apparatus 100 in the present disclosure.

In an embodiment, as shown in FIG. 4 and FIG. 5, the power coupling apparatus 100 in the present disclosure further includes a support bearing 51. The support bearing 51 is sleeved around the outer edge of the first shaft 11 and is at least partially accommodated in the electromagnetic drive element 41. An inner ring of the support bearing 51 is connected to the first shaft 11, and an outer ring of the support bearing 51 is connected to the electromagnetic drive element 41. It will be understood that, disposition the support bearing 51 ensures that the first shaft 11 rotates around the first axis L1 while keeping the electromagnetic drive element 41 relatively stationary. This implements support for the electromagnetic drive element 41, and positioning of the electromagnetic drive mechanism 40.

In an embodiment, as shown in FIG. 4 and FIG. 5, the power coupling apparatus 100 in the present disclosure further includes a second support bearing 52. The second support bearing 52 is sleeved around the outer edge of the first shaft 11 and is spaced from the support bearing 51. A receiving hole 121 is provided on a surface of the second shaft 12 that faces the first shaft 11.

The second support bearing 52 is accommodated in the receiving hole 121, an outer ring of the second support bearing 52 is connected to a hole wall of the receiving hole 121, and an inner ring is connected to the first shaft 11. It will be understood that the support bearing 51 and the second support bearing 52 match each other, defining relative positions of the first shaft 11, the second shaft 12, and the electromagnetic drive mechanism 40, thereby further ensuring effect of supporting the first shaft 11.

In an embodiment, as shown in FIG. 4 and FIG. 5, the power coupling apparatus 100 in the present disclosure further includes a thrust bearing 53. The thrust bearing 53 is connected between the first engagement mechanism 20 and the second engagement mechanism 30 to transmit an axial load between the first engagement mechanism 20 and the second engagement mechanism 30. This further ensures relative positions of the first engagement mechanism 20 and the second engagement mechanism 30 in the first direction 001.

It will be understood that, the terms "first", "second", and the like are merely intended for a purpose of description, and will not be understood as an indication or implication of relative importance or an implicit indication of a quantity of indicated technical features. Therefore, a feature limited by "first" or "second" may explicitly or implicitly include one or more features. In the description of implementations of the present disclosure, unless otherwise specifically limited, "a plurality of" means two or more.

In the descriptions of this specification, the reference term such as "an implementation", "some implementations", "example implementation", "example", "specific example", or "some examples" means that specific features, structures, materials, or characteristics described with reference to the implementations are included in at least one implementation or example of the present disclosure. In this specification, example expressions of the foregoing terms do not necessarily mean a same implementation or example. Furthermore, the specific features, structures, materials, or characteristics may be combined in a proper manner in any one or more of implementations or examples.

It will be understood that, application of the present disclosure is not limited to the foregoing examples, and a person of ordinary skill in the art may make improvements or variations based on the foregoing descriptions, and all such improvements and variations shall fall within the protection scope of the appended claims of the present disclosure. A person of ordinary skill in the art may understand that all or some of the procedures of the foregoing embodiments and equivalent variations made according to the claims of the present invention still fall within the scope of the present invention.

## Claims

1. A power coupling apparatus (100), comprising:
a first shaft (11);
a first engagement mechanism (20), the first engagement mechanism (20) being connected to the first shaft (11);
a second shaft (12);
a second engagement mechanism (30), the second engagement mechanism (30) being connected to the second shaft (12); and
an electromagnetic drive mechanism (40), the electromagnetic drive mechanism (40) being configured to control coupling or decoupling between the first engagement mechanism (20) and the second engagement mechanism (30).

2. The power coupling apparatus (100) according to claim 1, wherein
the first engagement mechanism (20) comprises at least one first connection portion (21);
the second engagement mechanism (30) comprises a second connection portion (31) matching the first connection portion (21), and the second connection portion (31) is disposed above the first connection portion (21) in a first direction; and
the electromagnetic drive mechanism (40) comprises a movable portion (431) corresponding to the second connection portion (31), and the movable portion (431) is configured to control the second connection portion (31) to be coupled to the first connection portion (21).

3. The power coupling apparatus (100) according to claim 2, wherein
the second engagement mechanism (30) further comprises an elastic member (32) connected to the second connection portion (31); and
the elastic member (32) is configured to control the second connection portion (31) to be decoupled from the first connection portion (21).

4. The power coupling apparatus (100) according to claim 2, wherein the second connection portion (31) comprises a guide portion (311), the guide portion (311) matches the movable portion (431), and the guide portion (311) and the movable portion (431) are configured to control the second connection portion (31) to be coupled to the first connection portion (21).

5. The power coupling apparatus (100) according to claim 4, wherein the guide portion (311) comprises a first surface (3111) and a second surface (3112) that are connected, and an included angle between the second surface (3112) and the first surface (3111) is an obtuse angle.

6. The power coupling apparatus (100) according to claim 4 or 5, wherein the movable portion (431) comprises a guide surface (4311), the guide surface (4311) being disposed at an end portion of the movable portion (431), and the guide surface (4311) being an inclined surface.

7. The power coupling apparatus (100) according to claim 2, wherein
the first connection portion (21) comprises a groove (211) facing the second connection portion (31);
the second connection portion (31) comprises a protruding block (312) facing the first connection portion (21); and
the movable portion (431) controls the protruding block (312) to extend into the groove (211), to implement coupling between the first connection portion (21) and the second connection portion (31).

8. The power coupling apparatus (100) according to claim 7, wherein
a side surface of the groove (211) is provided with a limiting protrusion (2111);
a side surface of the protruding block (312) that is close to the limiting protrusion (2111) is provided with a limiting groove (3121); and
when the movable portion (431) controls the protruding block (312) to extend into the groove (211), the limiting protrusion (2111) is embedded in the limiting groove (3121), to improve coupling stability of the first connection portion (21) and the second connection portion (31).

9. The power coupling apparatus (100) according to any one of claims 2 to 8, wherein
the electromagnetic drive mechanism (40) further comprises:
an electromagnetic drive element (41);
a magnetic element (42); and
a mounting board (43), the magnetic element (42) being connected to the mounting board (43), and the mounting board (43) being provided with the movable portion (431); and
when the electromagnetic drive element (41) is powered on, the magnetic element (42) is attracted by the electromagnetic drive element (41), to drive the movable portion (431) of the mounting board (43) to decouple the first connection portion (21) from the second connection portion (31).

10. The power coupling apparatus (100) according to claim 9, wherein the electromagnetic drive element (41) is annular and is sleeved around an outer edge of the first shaft (11).

11. The power coupling apparatus (100) according to claim 9, wherein
the electromagnetic drive mechanism (40) further comprises:
a push plate assembly (44), connected between the mounting board (43) and the magnetic element (42); and
a second elastic member (45), connected between the electromagnetic drive element (41) and the push plate assembly (44);
when the electromagnetic drive element (41) is powered on, the magnetic element (42) is attracted by the electromagnetic drive element (41) to drive the movable portion (431) of the mounting board (43) to decouple the first connection portion (21) from the second connection portion (31), and the second elastic member (45) is compressed; and
when the electromagnetic drive element (41) is powered off, the second elastic member (45) expands to drive the movable portion (431) of the mounting board (43) through the push plate assembly (44), to couple the first connection portion (21) and the second connection portion (31).

12. The power coupling apparatus (100) according to claim 11, wherein
the push plate assembly (44) comprises:
a first push plate (441), connected to the mounting board (43);
a second push plate (442), connected to the magnetic element (42); and
a bearing (443), connected between the first push plate (441) and the second push plate (442); and
the bearing (443) is configured to transmit axial force exerted by the electromagnetic drive element (41) or the second elastic member (45) when the electromagnetic drive element (41) is powered on or off.

13. The power coupling apparatus (100) according to claim 9, wherein the power coupling apparatus (100) further comprises a support bearing (51) that is sleeved around the outer edge of the first shaft (11) and is at least partially accommodated in the electromagnetic drive element (41) to support the electromagnetic drive element (41).

14. The power coupling apparatus (100) according to any one of claims 2 to 8, wherein the power coupling apparatus (100) further comprises a thrust bearing (53) that is connected between the first engagement mechanism (20) and the second engagement mechanism (30) to transmit an axial load between the first engagement mechanism (20) and the second engagement mechanism (30).

15. A transmission (200), comprising the power coupling apparatus (100) according to any one of claims 1 to 14.

16. The transmission (200) according to claim 15, wherein the transmission (200) comprises a housing, and the power coupling apparatus (100) is accommodated in the housing.

17. A powertrain (300), comprising a first power apparatus (301), a second power apparatus (302), and the transmission (200) according to claim 15 or 16, the first power apparatus (301) being connected to a second end of the transmission (200), and the second power apparatus (302) being connected to a first end of the transmission (200).

18. The powertrain (300) according to claim 17, wherein the powertrain (300) further comprises a third power apparatus (303), and the third power apparatus (303) is connected to the first end of the transmission (200).

19. A vehicle, comprising the powertrain (300) according to claim 17 or 18.
